# EUROPÄISCHE PATENTANMELDUNG

(11) **EP 1 762 503 A1**
(43) Veröffentlichungstag der Anmeldung: **14.03.2007**
(21) Anmeldenummer: 05405523.1
(22) Anmeldetag: 07.09.2005
(51) Int. Cl.: B65D 77/20, B29C 51/02

(54) **Sterilisierbarer, halbstarrer Behälter mit Deckel und Etikett**

(71) Anmelder: Alcan Technology & Management Ltd., 8212 Neuhausen am Rheinfall (CH)
(72) Erfinder: Bijsterbosch, Albert, 8181 ZL Heerde (NL); Heerink, Jeroen, 7327 DS Apeldoorn (NL); Verbeek, Dick C., 7325 PC Apeldoorn (NL)

(57) **Zusammenfassung**

Bei einem sterilisierbaren, halbstarren Behälter (10) mit einem Boden (12), einer vom Boden (12) aufragenden Seitenwand (14), einer ringförmigen Siegelfläche (18) und einem auf die Siegelfläche (18) peelbar aufgesiegelten Deckel (28) ist auf dem Deckel (28) und/oder auf dem Boden (12) eine sterilisierbare, bedruckte Etikette aufgeklebt.

## Beschreibung

Die Erfindung betrifft einen sterilisierbaren, halbstarren Behälter mit einem Boden, einer vom Boden aufragenden Seitenwand, einer ringförmigen Siegelfläche und einem auf die Siegelfläche peelbar aufgesiegelten Deckel. Im Rahmen der Erfindung liegt auch ein Verfahren zur Herstellung der Behälter.

Sterilisierbare Behälter aus halbstarrem Material sind bekannt und werden beispielsweise zur Verpackung von lang haltbaren Produkten, wie z. B. Tierfutter, oder von zum späteren Aufwärmen im Mikrowellen- oder Backofen vorbereiteten Speisen verwendet.

Die Behälter bestehen häufig aus einer beispielsweise goldfarbig lackierten und durch Tiefziehen geformten Aluminiumfolie. Der fest oder peelbar auf den Behälter aufgesiegelte Deckel ist üblicherweise aus demselben Material wie der Behälter gefertigt und oft mit einer dem Behälterinhalt entsprechenden Bedruckung versehen.

Das Bedrucken des Deckelmaterials ist mit zusätzlichen Kosten verbunden und führt insbesondere bei kleinen Bestellmengen von Behälter- und Deckelmaterial zu einem erheblichen Anteil an den Gestehungskosten für die Behälter.

Der Erfindung liegt die Aufgabe zugrunde, sterilisierbare Behälter der eingangs genannten Art mit einer insbesondere für kleine Bestellmengen von Behälter- und Deckelmaterial kostengünstigen Bedruckung zu schaffen.

Erfindungsgemäss wird die Aufgabe dadurch gelöst, dass auf dem Deckel und/oder auf dem Boden des Behälters eine sterilisierbare, bedruckte Etikette aufgeklebt ist.

Bei einem stertlisierbaren Behälter, bei dem die Seitenwand in die Siegelfläche und der über einen Siegelrand gegen die Siegelfläche gesiegelte Deckel über eine Deckelflanke in einen von der Siegelfläche abgesetzten, flächigen Deckelteil übergeht, ist die Etikette bevorzugt auf dem Deckelteil aufgeklebt. Im Bedarfsfall kann sich die Etikette über den Deckelteil hinaus auch noch auf die beispielsweise um einen Winkel von 40° bis 50° gegen die Seitenwand geneigte Deckelflanke erstrecken, nicht jedoch auf die Siegelfläche.

In gleicher Weise ist bei einem sterilisierbaren Behälter, bei dem der Boden eine ringförmige Standfläche aufweist, die über eine einwärts gerichtete Bodenflanke in einen von der Standfläche abgesetzten, flächigen Bodenteil übergeht, die Etikette auf dem Bodenteil aufgeklebt. Die Bodenflanke ist beispielsweise um den gleichen Winkel von 40° bis 50° gegen die Seitenwand geneigt, und die Etikette kann sich auch hier auf die Bodenflanke des Behälters erstrecken, nicht jedoch auf die Standfläche.

Bei den vorstehend beschriebenen Behälter- und Deckelausführungen mit abgesetztem Boden- bzw. Deckelteil wird die bedruckte Etikette zweckmässigerweise bereits vor dem Tiefziehschritt auf das unverformte, ebene Behälter- bzw. Deckelfolienmaterial aufgebracht. Es ist jedoch auch möglich, die bedruckte Etikette direkt nach dem Tiefziehschritt auf den fertigen Behälter aufzubringen.

Bei ausgestanzten flachen Deckeln, d.h. bei Deckeln ohne abgesetzten Deckelteil, kann die Etikette ebenfalls auf das unverformte, ebene Deckelmaterial aufgebracht werden.

Bei einer ersten bevorzugten Ausführung eines sterilisierbaren Behälters besteht der Behälter und/oder der Deckel aus einer Aluminiumfolie, deren eine Oberfläche mit einer Lackschicht versehen ist und deren andere Oberfläche eine Siegelschicht aufweist, und der Behälter ist durch Tiefziehen geformt.

Bei einer zweiten bevorzugten Ausführung eines sterilisierbaren Behälters besteht der Behälter und/oder der Deckel aus einer beidseitig mit einer Aluminiumfolie versehenen Kemschicht aus einem Kunststoff, und eine der freien Oberflächen der Aluminiumfolien ist mit einer Lackschicht, die andere Oberfläche mit einer Siegelschicht versehen.

Der für die Kemschicht verwendete Kunststoff ist bevorzugt Polyethylen (PE), Polypropylen (PP) oder Polyethylenterephthalat (PET). Die Kemschicht kann aber auch in der Form eines extrudierten Kunststoffschaums aus Polypropylen (PP) oder Polyethylenterephthalat (PET) vorliegen.

Die Etiketten weisen bevorzugt eine Trägerschicht aus einem Kunststoff oder aus einer Aluminiumfolie auf und sind auf einer Seite mit einer Bedruckung und optional mit einem Drucküberlack und auf der anderen Seite mit einer selbst haftenden Klebstoffschicht versehen.

Der Kunststoff der Trägerschicht ist bevorzugt Polyethylen (PE), Polypropylen (PP) oder Polyethylenterephthalat (PET). Für die Klebstoffschicht wird bevorzugt ein Klebstoff auf der Basis von Polyurethan (PU). Ethylenvinylacetat (EVA) oder Polyamid (PA) verwendet.

Die Etiketten müssen folgende Anforderungen erfüllen:
- Gute Anfangshaftung (so genannter "Green Tack") vor der Sterilisation und eine gute Dauerhaftung während einer üblichen Haltbarkeitsdauer des Produktes von etwa 2 Jahren nach der Sterilisation.
- Gute chemische Beständigkeit und ausgezeichnete Adhäsion auf der unverformten Aluminiumfolie, auch in Verbindung mit der Anwendung eines Schmiermittels beim Tiefziehen.
- Keine Migration von Komponenten aus dem Klebstoff- und Etikettenmatenal vor und nach der Sterilisation entsprechend den gesetzlichen Vorschriften.
- Keine Absorption von Wasser vor und nach der Sterilisation zur Vermeidung von Luftblasen und/oder Delamination zwischen verschiedenen Etikettschichten.
- Faltenfreiheit nach der Sterilisation (ebene Etikettenoberfläche).
- Gute optische Eigenschaften nach der Sterilisation, insbesondere bezüglich Glanz, kein Verlust an Transparenz, UV-Stabilität.
- Keine Beschädigung der Bedruckung bzw. der Tinte, d.h. eine hohe Kratzfestigkeit und keine Farbverschiebung.

Durch die Verwendung sterifisierbarer Etiketten ergibt sich eine zunehmende Flexibilität bei der Behälter- und Deckelherstellung bei verhättnismässig geringen zusätzlichen Investitionen. Weitere Vorteile sind:
- Möglichkeit, die Dicke insbesondere der zur Herstellung der Deckel verwendeten Aluminiumfolie wegen der Stützfunktion der vorgängig einer Verformung auf dem ebenen Deckelmaterial aufgebrachten Etiketten herabzusetzen.
- Die vor dem Tiefziehen und/oder Ausstanzen auf das Behälter- und Deckelmaterial aufgebrachten Etiketten ermöglichen zusammen mit einer präzisen Steuerung der Vorschublänge eine genauere Positionierung der Etikette im abgesetzten Deckelteil bzw. Behälterbodenteil im Vergleich zu einer Etikettierung nach erfolgtem Füllen, Siegeln und Sterilisieren, da eine gefüllte Packung häufig nicht dimensionsstabil ist (konvexer Deckel oder keine glatte Oberfläche nach dem Füllen).
- Das Prägen des Deckelmaterials ist nicht mehr erforderlich, da die vorgängig aufgebrachten Etiketten den zwischen zwei und mehr Deckeln auftretenden so genannten Glasplatteneffekt verhindern.
- Wegen der fehlenden Prägung auf der bedruckten Oberfläche ist die Deckeloberfläche glatter und weist einen hohen Glanz auf.
- Die Beulfestigkeit kann insbesondere durch die Verwendung von Energie absorbierendem Deckelmaterial verbessert werden.
- Beim Kunden ist keine Etikettierausrüstung mehr erforderlich.
   Die vorliegende Erfindung umfasst sämtliche Behälter und Deckelformen, die mit den üblichen Tiefziehverfahren hergestellt werden können. Mögliche Formen sind beispielsweise rund, quadratisch, dreieckig, rechteckig, pentagonal, hexagonal und oktagonal und eignen sich auch für flache Deckel ohne abgesetzten Deckelteil,
   Die vorliegende Erfindung ist nicht auf die Verwendung von Aluminiumfolien zur Herstellung der Behälter und Deckel beschränkt. Behälter und Deckel können beispielsweise auch durch Thermoformen von Polymerwerkstoffen hergestellt werden.
   Die erfindungsgemässen Behälter können beispielsweise verwendet werden zur Verpackung von kosmetischen Präparaten, pharmazeutischen Präparaten, medizinischen oder therapeutischen Darreichungen und Hilfsmitteln und auch von Tierfutter.
   Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine Schrägsicht auf einen Behälter mit teilweise geöffnetem Deckel;
- Fig. 2 die Draufsicht auf den Behälter von Fig. 1;
- Fig. 3 die Druntersicht auf den Behälter von Fig. 1;
- Fig. 4 einen Querschnitt durch den Behälter von Fig. 1 nach der Linie I-I von Fig. 2;
- Fig. 5 einen Schnitt durch ein erstes Folienmaterial für Behälter und Deckel;
- Fig. 6 einen Schnitt durch ein zweites Folienmaterial für Behälter und Deckel;
- Fig. 7 einen Schnitt durch ein sterilisierbares Etikettenmaterial.

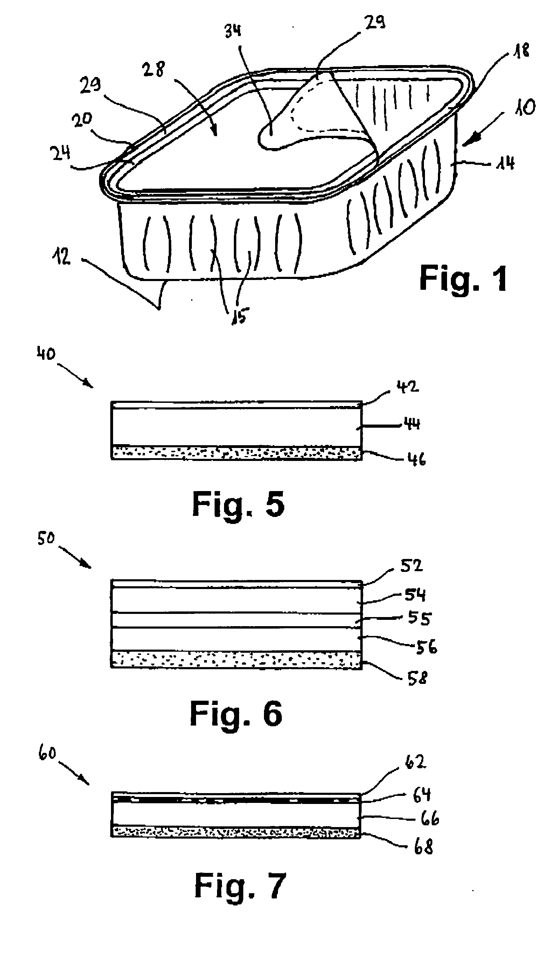

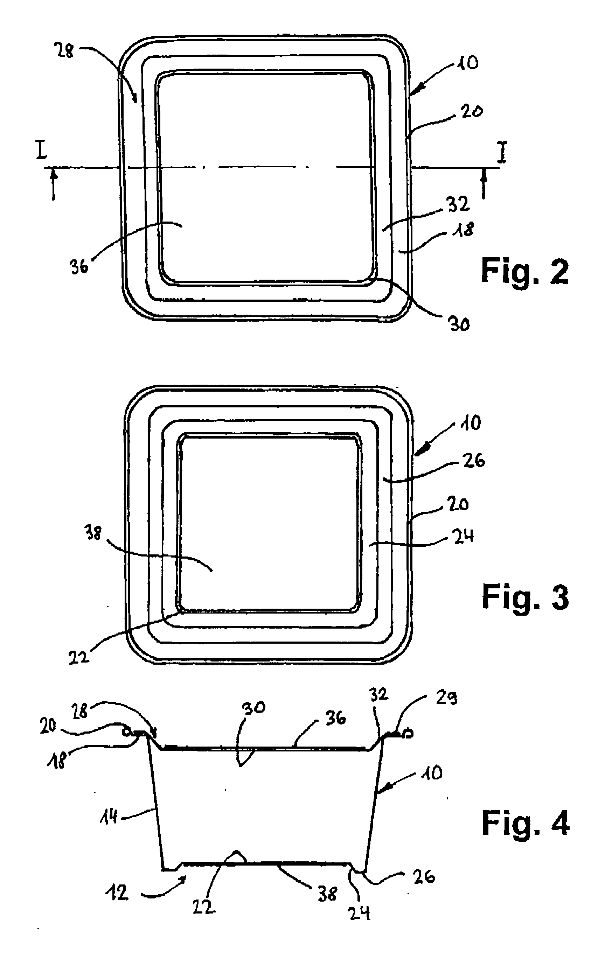

Ein in den Figuren 1 bis 4 dargestellter sterilisierbarer, halbstarrer Behälter 10 zur Aufnahme von beispielsweise Tierfutter weist einen Boden 12 und eine von diesem aufragende, ein Füllgutvolumen begrenzende Seitenwand 14 auf. Zur Versteifung des Behälters 10 können in der Seitenwand 14 Versteifungsrippen 15 vorgesehen. Vom Boden 12 erstreckt sich die Seitenwand 14 mit einem auswärts gerichteten Neigungswinkel von 1° bis 12° nach oben und geht an ihrem bodenfemen Ende in eine horizontal nach aussen abragende, ringförmige Siegelfläche 18 einer Breite von z.B. 2,5 bis 5,0 mm über. Der nach der Siegelfläche 18 verbleibende Teil der Seitenwand 14 wird als Behälterrand 20 so nach aussen gerollt, dass die obere Kante des beispielsweise einen Durchmesser von 1,0 bis 2,5 mm aufweisenden Rollrandes oberhalb der durch die Siegelfläche 18 gebildeten Ebene liegt.

Am Boden 12 des Behälters 10 ist ein flächiger Bodenteil 22 gegenüber einer ringförmigen Standfläche 26 über eine in einem Winkel von 40 bis 50° einwärts gerichtete Flanke 24 zurückversetzt.

Ein den Behälter 10 verschliessender Deckel 28 ist über einen äusseren Siegelrand 29 gegen die Siegelfläche 18 des Behälters 10 gesiegelt. Ausgehend vom Siegelrand 29 geht der Deckel 28 über eine Deckelflanke 32 in einen horizontalen, zum Bodenteil 22 parallel angeordneten Deckelteil 30 über.

Im Beispiel von Fig. 1 ist der Deckel 28 peelbar ausgebildet und lässt sich über eine ausserhalb des Siegelrandes 29 angeordnete Aufreisslasche 34 von der Siegelfläche 18 des Behälters 10 abziehen.

Der Deckel 28 ist so mit einer Etikette 36 versehen, dass diese im wesentlichen den zurückversetzten Deckelteil 30 vollständig überdeckt und mit diesem verklebt ist. Eine gegebenenfalls am Boden 12 angeordnete Etikette 38 ist in gleicher Weise mit dem Bodenteil 22 verklebt. Es sei hier noch erwähnt, dass sich die Etiketten 36, 38 zusätzlich zum Deckelteil 30 beziehungsweise Bodenteil 22 auch noch über wenigstens einen Teil der Flanken 24, 32 erstrecken können. Die Siegelfläche 29 des Deckels 28 bzw. die Standfläche 26 des Behälters 10 dürfen von der Etikette 36, 38 nicht überdeckt werden.

Ein in Fig. 5 dargestellter erster Aufbau eines zur Herstellung von Behälter 10 und Deckel 28 geeigneten Materials 40 besteht aus einer Aluminiumfolie 44, deren eine Oberfläche mit einer Lackschicht 42 versehen ist und deren anderen Seite eine Siegelschicht 46 aufweist.

Ein zweites, zur Herstellung von Behälter 10 und Deckel 28 geeignetes Material weist gemäss Fig. 6 eine beidseitig mit einer Aluminiumfolie 54, 56 versehene Kemschicht 55 auf. Eine der freien Oberfläche der Aluminiumfolien 54, 56 ist mit einer Lackschicht 52, die andere Oberfläche mit einer Siegelschicht 58 belegt.

Als Heisssiegelschicht 46, 58 dient beispielsweise Polyethylen (PE) oder Polypropylen (PP) in einer Schichtdicke von 20 bis 200 µm. Eine dicke Siegelschicht kann gleichzeitig auf Behälter 10 und Deckel 28 auftreffende Stösse absorbieren und so Beschädigungen der Verpackung vermindern.

Die erwähnten Siegelschichten aus Polyethylen (PE) und Polypropylen (PP) können auch ein Heisssiegellack sein.

Die als Tiefziehmedium eingesetzte Aluminiumfolie 44 des ersten Materials 40 weist für den Deckel 28 eine Dicke von 20 bis 80 µm und für den Behälter 10 eine Dicke von 20-200 µm auf.

Beim zweiten Behälter- und Deckelmaterial 50 beträgt die Dicke der beiden Aluminiumfolien 54, 56 ebenfalls 20 bis 200 µm, wobei das Deckelmaterial bevorzugt eine Dicke von z. B. 20 bis 80 µm und das Behältermaterial bevorzugt eine Dicke von z. B. 20 bis 80 µm aufweist. Als Kemschicht 55 eignet sich Polyethylen (PE) bzw. Polypropylen (PP) in einer Dicke von 20 bis 200 µm. Die Kernschicht 55 kann aber auch in der Form extrudierter Schäume aus beispielsweise Polypropylen (PP) oder Polyethylenterephthalat (PET) in einer Dicke von 500 bis 2000 µm vorliegen.

Ein in Fig. 7 dargestelltes, zur Herstellung der Etiketten 36, 38 geeignetes Material 60 weist eine Trägerschicht 66 aus Polyethylen (PE), Polypropylen (PP) oder Polyethylenterephthalat (PET) auf. Als Trägermaterial 66 kann aber beispielsweise auch eine Aluminiumfolie dienen. Eine Seite des Trägermaterials 66 ist mit einer selbst haftenden Klebstoffschicht 68 versehen, die andere Seite trägt eine Bedruckung 64 sowie optional einen Drucküberlack 62. Unter dem Drucküberlack kann zusätzlich ein auf einer thermochromatischen Tinte basierender Sterilisationsindikator, der eine erfolgte Sterilisation durch Farbumschlag anzeigt, angeordnet werden,

Die Lackschicht 42, 52 des Behälter- und Deckelmaterials ist üblicherweise farbig. Bevorzugte Farben sind gold, silbern, weiss, blau, grün, purpum und rot. Diese Farben werden auch für die Bedruckung 64 des Etikettenmaterials bevorzugt.

Sterilisierbarkeit bedeutet im Zusammenhang mit der vorliegenden Erfindung eine Behandlung unter übliche Sterilisierbedingungen, d.h. 30 min bei einer Temperatur von 130 °C bei einem Druck von 2,6 bar und einem Gegendruck von 2,8 bar.

## Patentansprüche

1. Sterilisierbarer, halbstarrer Behälter (10) mit einem Boden (12), einer vom Boden (12) aufragenden Seitenwand (14), einer ringförmigen Siegelfläche (18) und einem auf die Siegelfläche (18) peelbar aufgesiegelten Deckel (28),
**dadurch gekennzeichnet, dass**
auf dem Deckel (28) und/oder auf dem Boden (12) des Behälters (10) eine sterilisierbare, bedruckte Etikette (36, 38) aufgeklebt ist.

2. Sterilisierbarer Behälter (10) nach Anspruch 1, **dadurch gekennzeichnet, dass** die Seitenwand (14) in die Siegelfläche (18) und der über einen Siegelrand (29) gegen die Siegelfläche (18) gesiegelte Deckel (28) über eine Deckelflanke (32) in einen von der Siegelfläche (18) abgesetzten, flächigen Deckelteil (30) übergeht, und die Etikette (36) auf dem Deckelteil (30) aufgeklebt ist.

3. Sterilisierbarer Behälter (10) nach Anspruch 1, **dadurch gekennzeichnet, dass** der Boden (12) eine ringförmige Standfläche (26) aufweist, die über eine einwärts gerichtete Bodenflanke (24) in einen von der Standfläche (26) abgesetzten, flächigen Bodenteil (22) übergeht, und die Etikette (38) auf dem Bodenteil (22) aufgeklebt ist.

4. Sterilisierbarer Behälter (10) nach Anspruch 3, **dadurch gekennzeichnet, dass** die Bodenflanke (24) um einen Winkel von 40° bis 50° gegen die Standfläche (26) geneigt ist.

5. Steritisierbarer Behälter (10) und Deckel (28) nach einem der Ansprüche 1 bis 4, **dadurch gekennzeichnet, dass** der Behälter (10) und/oder der Deckel (28) aus einer Aluminiumfolie (44) besteht, deren eine Oberfläche mit einer Lackschicht (42) versehen ist und deren andere Oberfläche eine Siegelschicht (46) aufweist, und der Behälter (10) und der Deckel durch Tiefziehen geformt sind.

6. Sterilisierbarer Behälter (10) und Deckel (28) nach einem der Ansprüche 1 bis 4, **dadurch gekennzeichnet, dass** der Behälter (10) und/oder der Deckel (28) aus einer beidseitig mit einer Aluminiumfolie (54, 56) versehenen Kemschicht (55) aus einem Kunststoff besteht und eine der freien Oberflächen der Aluminiumfolien (54, 56) mit einer Lackschicht (52), die andere Oberfläche mit einer Siegelschicht (58) versehen ist.

7. Sterilisierbarer Behälter (10) und Deckel (28) nach Anspruch 6, **dadurch gekennzeichnet, dass** der Kunststoff der Kemschicht (55) Polyethylen (PE), Polypropylen (PP) oder Polyethylenterephthalat (PET) ist.

8. Sterilisierbarer Behälter (10) und Deckel (28) nach Anspruch 6, **dadurch gekennzeichnet, dass** die Kemschicht (55) in der Form eines extrudierten Kunststoffschaums aus Polypropylen (PP) oder Polyethylenterephthalat (PET) vorliegt.

9. Sterilisierbarer Behälter (10) und Deckel (28) nach einem der Ansprüche 1 bis 8, **dadurch gekennzeichnet, dass** die Etiketten (36, 38) eine Trägerschicht (66) aus einem Kunststoff oder aus einer Aluminiumfolie aufweist und auf einer Seite mit einer Bedruckung (64) mit optionalem Drucküberlack (62) und auf der anderen Seite mit einer selbst haftenden Klebstoffschicht (68) versehen ist.

10. Sterilisierbarer Behälter (10) und Deckel (28) nach Anspruch 9, **dadurch gekennzeichnet, dass** der Kunststoff der Trägerschicht (66) Polyethylen (PE), Polypropylen (PP) oder Polyethylenterephthalat (PET) ist.

11. Sterilisierbarer Behälter (10) und Deckel (28) nach Anspruch 9, **dadurch gekennzeichnet, dass** die Klebstoffschicht (68) einen Klebstoff auf der Basis von Polyurethan (PU), Ethylenvinylacetat (EVA) oder Polyamid (PA) enthält.

12. Verfahren zur Herstellung eines sterilisierbaren Behälters (10) und Deckels (28) nach einem der Ansprüche 1 bis 11, **dadurch gekennzeichnet, dass** die Etiketten (36, 38) an vorbestimmten Stellen auf das zur Herstellung von Behälter (10) und Deckel (28) vorgesehene Material aufgeklebt werden.
